# EUROPEAN PATENT SPECIFICATION

(11) **EP 3 945 951 B1**
(45) Date of publication and mention of the grant of the patent: **03.05.2023**
(21) Application number: 20713761.3
(22) Date of filing: 13.03.2020
(51) Int. Cl.: A47J 19/02

(54) **DEVICE FOR EXTRACTING JUICE AND PULP FROM FRUIT**
VORRICHTUNG ZUR EXTRAKTION VON SAFT UND FRUCHTFLEISCH AUS OBST
DISPOSITIF D'EXTRACTION DE JUS ET DE PULPE À PARTIR DE FRUITS

(30) Priority: 26.03.2019 NL 2022810
(43) Date of publication of application: 09.02.2022
(73) Proprietor: Bravilor Bonamat BV, 1704 RD Heerhugowaard (NL)
(72) Inventor: RUTTEN, Mathias Anthonius Franciscus, 1704 RD Heerhugowaard (NL); SPIJKER, Antonius Johannes, 1704 RD Heerhugowaard (NL)
(74) Representative: Van Breda, Jacobus
(86) International application number: PCT/NL2020/050168
(87) International publication number: WO 2020/197381

(56) References cited:
- EP-A1- 1 297 767
- EP-B1- 1 297 767
- GB-A- 2 041 727
- JP-A- S5 934 221
- JP-U- S5 050 888
- US-A- 5 289 763

## Description

The invention relates to a device suitable for extracting juice and pulp from fruit, comprising a base with an electric motor and a rotatable cone and a rotatable sieve which are drivable by the electric motor, wherein the motor connects to a driveshaft for driving the rotatable cone and rotatable sieve, and wherein the rotatable cone has a rotationally fixed connection to the driveshaft.

US 5,289,763 discloses an apparatus for extracting juice and pulp from vegetables and fruits, having a base containing an electric motor, and a bowl removably attached to the base. The motor has a drive shaft which projects into the interior of the bowl for receiving process tools. The bowl is provided with a strainer which is equipped with a skirt which fits inside the central tube surrounding the drive shaft. The driving shaft has a spindle fitted thereon in two orientations, one in which the strainer remains static during operation and one in which the strainer is driven rotationally when the driving shaft is turning. Although the document is published in 1994 and stems from an invention of 1989, it consistently refers to the user of the apparatus as a housewife, probably presuming that men are not equipped or able to operate such an apparatus for extracting juice and pulp. The document EP 1 297 767 discloses a further apparatus for extracting juice and pulp from vegetables and fruits.

A disadvantage of this known device is that it requires remounting of the device to place the spindle in the intended orientation, depending on whether the user wants the driveshaft to drive both the strainer and the process tool which can be mounted in the bowl, or that the user only wants the driveshaft to drive the process tool so that the strainer remains stationary.

It is an object of the invention to provide a device according to the preamble which enables selectively processing of fruit into juice or pulp depending on the users desires and without need to remount the device. In this way the device will probably also be operable by a male person or a person of whatever gender, even in France.

According to the invention a device is proposed having the features of one or more of the appended claims so as to meet the inventions object as mentioned in the previous sentence.

An essential feature of the invention is that the rotatable sieve is mounted on a drive bush which via a freewheel bearing is provided on the driveshaft, and that the rotatable sieve is further provided with a brake for inhibiting rotation in a first direction and which enables rotation in a second direction that is opposite to the first direction. The rotational direction of the driveshaft then determines whether the device drives only the cone so as to provide a clear juice, or that both the cone and the sieve are driven simultaneously to convert the fruit into a smoothie of juice and pulp. Consistent therewith a preferable feature of the device of the invention is that the driveshaft is selectively rotatable in either the first direction or the second direction.

A suitable arrangement to enable the selection of the rotational direction of the drive shaft is by selecting the rotational direction of the electric motor that connects to the driveshaft. As an alternative the rotational direction of the driveshaft could be done entirely mechanically, for instance with gear wheels, but even mechanical engineers must admit that the conversion of the rotational direction can be carried out in a simpler and more cost-effective way by implementing this entirely with electronic means that drive the electric motor. Indeed also mechanical engineers have seen the light brought by electrical engineering.

A preferable and cost-effective way to embody the device such that the sieve will stand still when the driveshaft rotates in the first direction and will rotate when the driveshaft rotates in the second direction that is opposite to the first direction, is to embody the brake as a spring which is provided on the outer circumference of the drive bush, which spring connects to the sieve and connects to a fixture of the device. The spring preferably has a little play with respect to the outer circumference of the drive bush so that the spring can stand still whilst the driveshaft and drive bush rotate. This enables that when the driveshaft and drive bush rotate in the first direction, the brake spring inhibits rotation of the sieve. On the other hand when the driveshaft and drive bush rotate in the second direction, the brake spring is arranged to release and enable that the sieve can rotate together with and in the same direction as the cone.

The invention will hereinafter be further elucidated with reference to the drawing, which shows in:
- figure 1 a three dimensional view at the device of the invention;
- figure 2 a detail of the device of figure 1 showing essentially only the driveshaft, the cone and the sieve, wherein only the cone is driven to rotate;
- figure 3 a detail of the device of figure 1 showing essentially only the driveshaft, the cone and the sieve, wherein both the cone and the sieve are driven to rotate;
- figure 4 a detail of the motor, driveshaft, spring brake, drive bush and bearing for the sieve; and
- figure 5 a detail of the drive bush and bearing for the sieve.

Whenever in the figures the same reference numerals are applied, these numerals refer to the same parts.

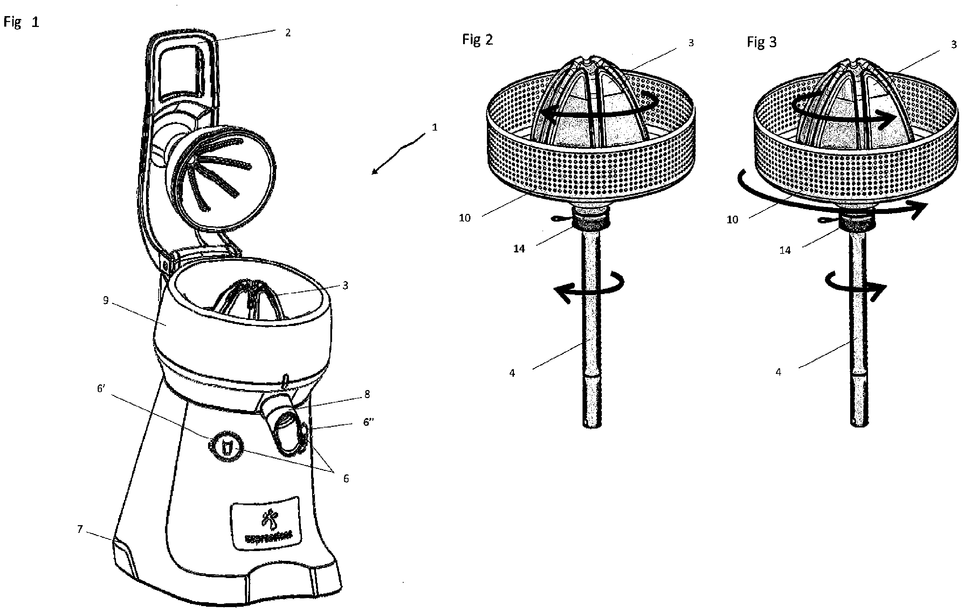

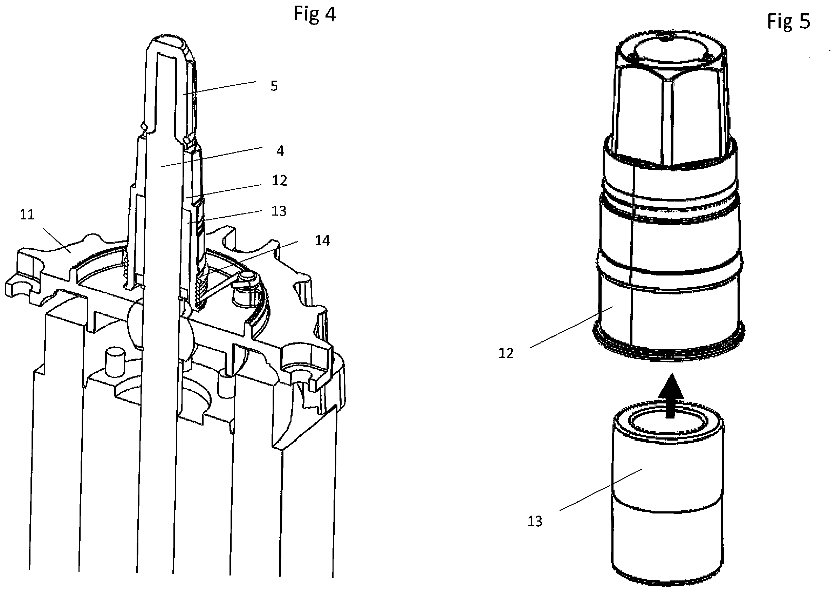

Turning now first to figure 1, what is shown is a device 1 equipped with a lever 2 which can be turned down onto a cone 3 to start operation of the device. The device 1 is in known way equipped with an electric motor 11 which drives a driveshaft 4 having a conical top end 5, all as shown in figure 4. Figure 1 shows that a slit 7 is provided in the body of the device 1 to cover the power cable for the electric motor 11 of the device 1. The cone 3 shown in figure 1 is mounted on top of the conical top end 5 with a rotationally fixed connection. This means that whenever the driveshaft 4 drives in clockwise or in counterclockwise direction, the cone 3 will likewise rotate in clockwise or in counterclockwise direction.

To determine the direction of rotation of the driveshaft 4, the body of the device 1 can be suitably provided with buttons 6 to select either direction. The buttons 6 may be provided with indication lights to show which button is selected. The buttons are in a known way part of electrical circuitry that drives the electric motor 11 of the device 1. To make it easy, button 6' may be used for selecting operation of the device 1 to provide a clear juice, and the other button 6" may be used for selecting operation of the device 1 to provide a smoothie of juice and pulp.

In a manner known from the prior art the device 1 is provided with an outlet 8 for dispensing the juice or pulp from the device 1. With reference 9 a releasable connection is indicated by which the part with the cone 3 can be temporarily removed from the device 1 for cleaning purposes by a person of arbitrary gender.

Although a sieve can be recognized in figure 1 to be provided circumferentially around the cone 3, figures 2 and 3 provide a better view at the cone 3 and the sieve 10. Since these figures 2 and 3 show for clarity only a detail of the device 1 of figure 1, i.e. the driveshaft 4, the cone 3 and the sieve 10, these figures are best equipped to explain the operation of the device 1 according to the invention. Although the electric motor 11 is not shown in these figures, this does not impair the understanding of the invention since it is obvious that the electric motor 11, which is shown in figure 4, is connected with the driveshaft 4.

Figure 2 shows that the driveshaft 4 rotates in clockwise direction, as does also the cone 3 mounted on top of the driveshaft. The sieve 10 is however stationary, which means that it does not rotate together with the cone 3. This operation is best suited to provide a clear juice as selected by button 6'.

Figure 3 shows that the driveshaft 4 rotates in counterclockwise direction, as does of course also the cone 3 mounted on top of the driveshaft. In this manner of operation the difference in comparison with figure 2 is that also the sieve 10 rotates in counterclockwise direction. This operation is best suited to provide a smoothie from juice and pulp, as may be selected by button 6".

The mechanical features that are proposed according to the invention to make the selective operation of figure 2 and figure 3 possible are shown in figures 4 and 5.

As already mentioned with reference to figure 4 the cone 3 is mounted on top of the conical top end 5 with a rotationally fixed connection. The sieve 10 on the other hand is mounted on a drive bush 12 which is via a freewheel bearing 13 (see also the detail of figure 5) provided on the driveshaft 4. The rotatable sieve 10 is further provided with a brake for inhibiting rotation in a first direction (selected by button 6'- clear juice) and enabling rotation in a second direction (selected by button 6" - smoothie) that is opposite to the first direction. As already mentioned to make the choice between clear juice and smoothie possible, the driveshaft 4 is selectively rotatable in either the first direction or the second direction depending on whether the user wants a clear juice or a smoothie.

Figure 4 shows that the selective arresting of the sieve 10 or on the other hand its rotation simultaneously with the cone 3 is realized by a brake that is embodied as a spring 14 which is provided on the outer circumference of the drive bush 12, wherein the spring 14 connects to the sieve 10 and connects to a fixture of the device 1. This spring 14 is also shown in figure 2 and figure 3.

Although the invention has been discussed in the foregoing with reference to an exemplary embodiment of the device of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims.

## Claims

1. Device (1) for extracting juice and pulp from fruit, comprising a base with an electric motor (11) and a rotatable cone (3) and a rotatable sieve (10), which cone (3) and sieve (10) are drivable by the electric motor (11), wherein the motor (11) connects to a driveshaft (4) for driving the rotatable cone (3) and rotatable sieve (10), and wherein the rotatable cone (3) has a rotationally fixed connection to the driveshaft (4), **characterized in that** the rotatable sieve (10) is mounted on a drive bush (12) which is via a freewheel bearing (13) provided on the driveshaft (4), and the rotatable sieve (10) is further provided with a brake for inhibiting rotation in a first direction and enabling rotation in a second direction that is opposite to the first direction.

2. Device (1) according to claim 1, **characterized in that** the driveshaft (4) is selectively rotatable in either the first direction or the second direction.

3. Device (1) according to claim 2, **characterized in that** the driveshaft (4) is selectively rotatable by selecting the rotational direction of the electric motor (11).

4. Device according to any one of claims 1 - 3, **characterized in that** the brake is embodied as a spring (14) which is provided on the outer circumference of the drive bush (12), which spring (14) connects to the sieve (10) and connects to a fixture of the device (1).

## Patentansprüche

1. Vorrichtung (1) zum Extrahieren von Saft und Fruchtfleisch aus Früchten, umfassend eine Basis mit einem Elektromotor (11) und einem rotierbaren Kegel (3) und einem rotierbaren Sieb (10), wobei der Kegel (3) und das Sieb (10) durch den Elektromotor (11) antreibbar sind, wobei der Motor (11) mit einer Antriebswelle (4) zum Antreiben des rotierbaren Kegels (3) und des rotierbaren Siebes (10) verbunden ist, und wobei der rotierbare Kegel (3) eine rotationsfeste Verbindung mit der Antriebswelle (4) aufweist, **dadurch gekennzeichnet, dass** das rotierbare Sieb (10) auf einer Antriebsbuchse (12) montiert ist, die über ein Freilauflager (13) auf der Antriebswelle (4) bereitgestellt ist, und dass das rotierbare Sieb (10) zudem mit einer Bremse bereitgestellt ist, um eine Rotation in einer ersten Richtung zu verhindern und eine Rotation in einer zweiten Richtung zu ermöglichen, die der ersten Richtung entgegengesetzt ist.

2. Vorrichtung (1) nach Anspruch 1, **dadurch gekennzeichnet, dass** die Antriebswelle (4) wahlweise in die erste Richtung oder in die zweite Richtung rotierbar ist.

3. Vorrichtung (1) nach Anspruch 2, **dadurch gekennzeichnet, dass** die Antriebswelle (4) durch Auswahl der Rotationsrichtung des Elektromotors (11) selektiv rotierbar ist.

4. Vorrichtung (1) nach einem der Ansprüche 1-3,
**dadurch gekennzeichnet, dass** die Bremse als eine am Außenumfang der Antriebsbuchse (12) vorgesehene Feder (14) ausgebildet ist, die mit dem Sieb (10) und mit einer Halterung der Vorrichtung (1) verbunden ist.

## Revendications

1. Dispositif (1) pour extraire le jus et la pulpe d'un fruit, comprenant une base avec un moteur électrique (11) et un cône rotatif (3) et un tamis rotatif (10), lequel cône (3) et lequel tamis (10) peuvent être entraînés par le moteur électrique (11), dans lequel le moteur (11) se raccorde à un arbre d'entraînement (4) pour entraîner le cône rotatif (3) et le tamis rotatif (10), et dans lequel le cône rotatif (3) a un raccordement fixe en rotation avec l'arbre d'entraînement (4), **caractérisé en ce que** le tamis rotatif (10) est monté sur une douille d'entraînement (12) qui est via un palier de roue libre (13) prévu sur l'arbre d'entraînement (4), et le tamis rotatif (10) est en outre prévu avec un frein pour empêcher la rotation dans une première direction et permettre la rotation dans une seconde direction qui est opposée à la première direction.

2. Dispositif (1) selon la revendication 1, **caractérisé en ce que** l'arbre d'entraînement (4) peut sélectivement tourner soit la première direction soit la seconde direction.

3. Dispositif (1) selon la revendication 2, **caractérisé en ce que** l'arbre d'entraînement (4) peut sélectivement tourner en sélectionnant la direction de rotation du moteur électrique (11) .

4. Dispositif (1) selon l'une quelconque des revendications 1-3,
**caractérisé en ce que** le frein est mis en œuvre sous la forme d'un ressort (14) qui est prévu sur la circonférence externe de la douille d'entraînement (12), lequel ressort (14) se raccorde au tamis (10) et se raccorde à une pièce du dispositif (1).
